# EUROPEAN PATENT SPECIFICATION

(11) **EP 1 359 040 B1**
(45) Date of publication and mention of the grant of the patent: **09.08.2006**
(21) Application number: 03252536.2
(22) Date of filing: 23.04.2003
(51) Int. Cl.: B60K 5/12

(54) **Vehicular power plant mounting system**
Lagerung für ein Fahrzeugmotor
Dispositif de support pour le moteur d'un véhicule

(30) Priority: 26.04.2002 JP 2002125960
(43) Date of publication of application: 05.11.2003
(73) Proprietor: HONDA GIKEN KOGYO KABUSHIKI KAISHA, Minato-ku, Tokyo (JP)
(72) Inventor: Igami, Hajime, K.K. Honda Gijutsu Kenkysho, Wako-shi, Saitama (JP)
(74) Representative: Stevens, Jason Paul

(56) References cited:
- EP-A- 0 297 226
- EP-A- 0 332 861
- US-A- 5 375 821
- US-A- 6 155 372
- US-B1- 6 199 842

## Description

The present invention relates to an improved mounting system for mounting, on a vehicle body frame, a power plant that includes an engine and a transmission connected to the engine at one end along the axis of a crankshaft of the engine.

Conventionally, front-wheel drive vehicles, etc. generally employ a principal axis of inertia 4-point support type mounting system, in which a power plant, which is formed from an engine and a transmission connected to the engine, is mounted on a vehicle body frame at two points on opposite sides along the principal axis of inertia of the power plant and at two points on opposite sides along a direction substantially perpendicular to the principal axis of inertia.

In such a principal axis of inertia 4-point support type mounting system, the vertical resonance frequency is generally set at 7 to 10 Hz, and the roll resonance frequency is set at 10 to 15 Hz. By setting the damping peak value of main mounts, which are placed at the two points on opposite sides along the principal axis of inertia of the power plant, at 6 to 9 Hz depending on the above settings, the ride comfort is improved by control of the vertical vibration, and moreover in the frequency region thereabove (anti-resonance region of the vertical frequency) the ride comfort is improved by coupled tuning of the roll mode.

However, in the above-mentioned conventional principal axis of inertia 4-point support type mounting system, since the spring characteristics at the four mounting points are coupled in the vertical direction and the roll direction, tuning is difficult, and it is hard to improve the ride comfort over the entire ride frequency region (5 to 15 Hz).

A torque rod type mounting system is known from, for example, Japanese Patent No 2562485, corresponding to EP-A-0 297 226, having a support rigidity lower than that of the conventional principal axis of inertia 4-point support type mounting system. Use of such a torque rod type mounting system can increase the degrees of freedom in tuning, since the spring characteristics of the torque rod do not affect in the vertical direction and the spring characteristics in the vertical direction and the roll direction are not coupled. However, Japanese Patent No. 2562485 above does not disclose a method for improving the ride comfort over the entire ride frequency region.

Similar mounting systems are disclosed in EP 0332861 and US 6155372.

The present invention has been devised in view of the above-mentioned circumstances, and it is an object of at least the preferred embodiments of the present invention to provide a vehicular power plant mounting system that can improve the ride comfort over the entire ride frequency region.

According to a first aspect of the invention, there is provided a vehicular power plant mounting system in which a power plant that includes an engine and a transmission connected to the engine at one end along an axis of a crankshaft of the engine is supported on a vehicle body frame via an engine side main mount and a transmission side main mount, each mount including a first elastic material and being disposed substantially on a principal axis of inertia of the power plant in such a manner that a vertical damping coefficient peak frequency can be set, and via a pair of upper and lower torque rods including a second elastic material which are disposed substantially horizontally within a plane substantially perpendicular to the axis of the crankshaft between the power plant and the vehicle body frame above and below drive shafts extending from the transmission, wherein a vertical resonance frequency of a mounting structure that includes the two main mounts and the two torque rods is set at 5 to 7 Hz, a roll resonance frequency around the principal axis of inertia of the mounting structure is set at 7 to 10 Hz, and a damping peak frequency of the two main mounts is set at 9 to 15 Hz.

In accordance with this arrangement, since the vertical resonance frequency of the mounting structure is set at 5 to 7 Hz, a vertical resonance frequency dynamic damper effect can be obtained. Further, since the roll resonance frequency around the principal axis of inertia of the mounting structure is set at 7 to 10 Hz, a dynamic damper effect can be obtained due to coupling of the vertical and roll modes, and since the damping peak frequency of the two main mounts is set at 9 to 15 Hz, a vehicle body frame responsive damping effect can be obtained due to the damping setting of the main mounts. As a result, the ride comfort can be improved at all ride frequencies from 5 to 15 Hz.

According to a second aspect of the invention there is provided a vehicular power plant mounting system in which a power plant that includes an engine and a transmission connected to the engine at one end along an axis of a crankshaft of the engine is supported on a vehicle body frame via an engine side main mount and a transmission side main mount, each mount including a first elastic material and being disposed substantially on a principal axis of inertia of the power plant in such a manner that a vertical damping coefficient peak frequency can be set, and via a pair of upper and lower torque rods including a second elastic material which are disposed substantially horizontally within a plane substantially perpendicular to the axis of the crankshaft between the power plant and the vehicle body frame above and below drive shafts extending from the transmission, wherein a frequency band of 5 to 15 Hz is divided into three bands, that is, upper, middle, and lower bands, and a vertical resonance frequency of a mounting structure that includes the two main mounts and the two torque rods is set in the lower band, a roll resonance frequency around the principal axis of inertia of the mounting structure is set in the middle band, and a damping peak frequency of the two main mounts is set in the upper band.

In accordance with this arrangement, the frequency band of 5 to 15 Hz is divided into three bands, that is, upper, middle, and lower bands; since the vertical resonance frequency of the mounting structure is set in the lower band, a vertical resonance frequency dynamic damper effect can be obtained; since the roll resonance frequency around the principal axis of inertia of the mounting structure is set in the middle band, a dynamic damper effect can be obtained due to coupling of the vertical and roll modes; and since the damping peak frequency of the two main mounts is set in the upper band, a vehicle body frame responsive damping effect can be obtained due to the damping setting of the main mounts. As a result, the ride comfort can be improved at all ride frequencies from 5 to 15 Hz.

A preferred embodiment of the present invention will now be described by way of example only and with reference to the accompanying drawings, in which:
FIG. 1 is a partially cutaway plan view showing a state in which a power plant is mounted in a vehicle;
FIG. 2 is a side view from arrow 2 in FIG. 1;
FIG. 3 is a side view from arrow 3 in FIG. 1;
FIG. 4 is a longitudinal cross section of an engine side main mount; and
FIG. 5 is a graph showing the vibration damping characteristics in comparison with a conventional arrangement.

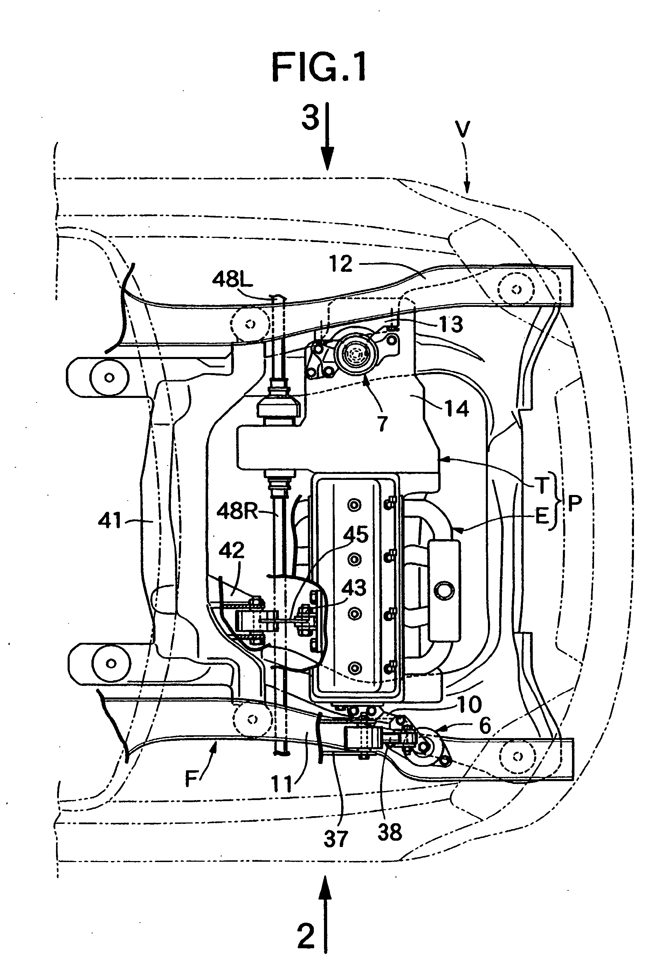

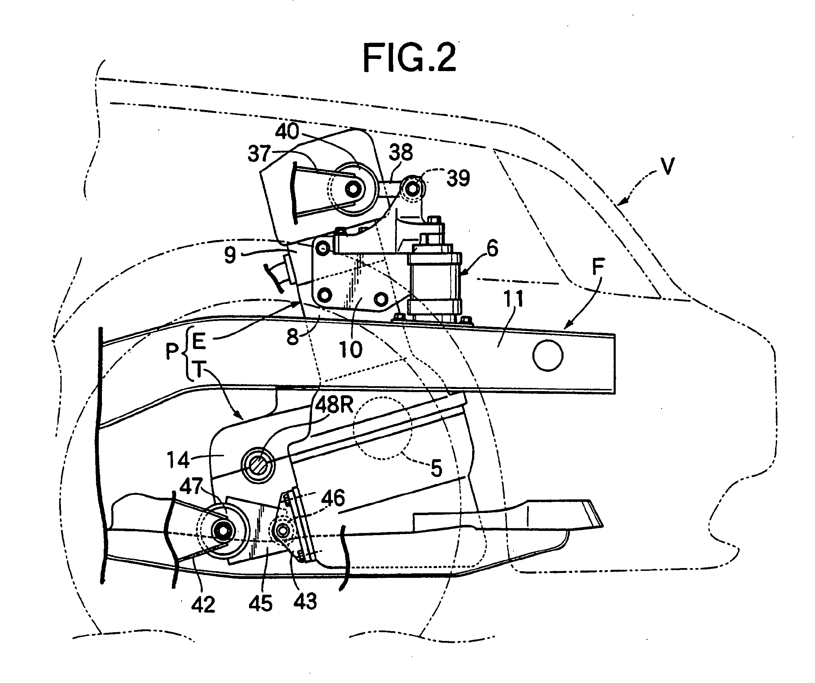

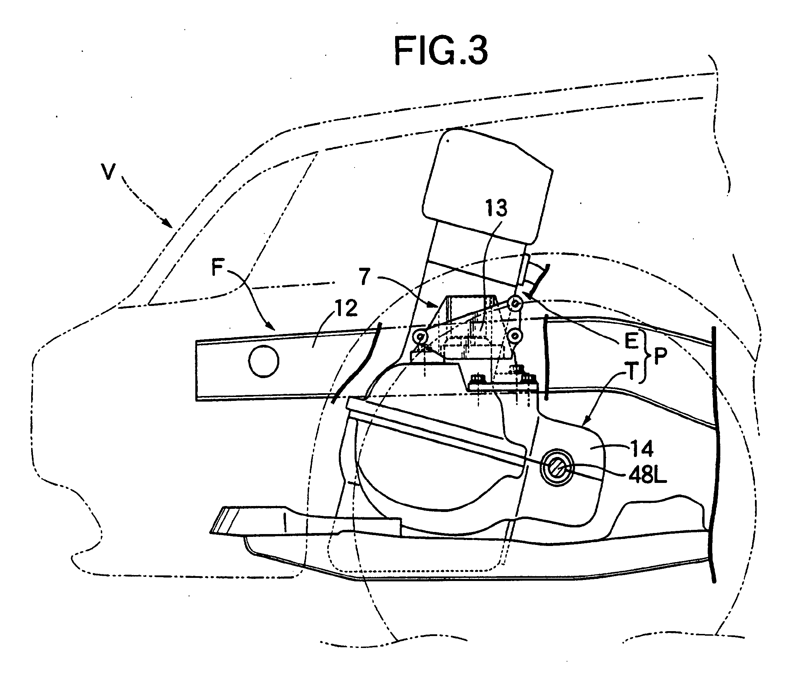

Referring firstly to FIG. 1 to FIG. 3, a power plant P is mounted in a front-engine, front-drive (FF) vehicle V, and is formed from a transversely mounted engine E having a crankshaft 5 running along the width direction of the vehicle V and a transmission T connected to the engine E at one end along the axis of the crankshaft 5.

The power plant P is supported on a vehicle body frame F via an engine side main mount 6 and a transmission side main mount 7, which are disposed substantially on the principal axis of inertia. That is, a bracket 10 is attached to a cylinder block 8 and a cylinder head 9 of the engine E at the other end along the axis of the crankshaft 5, and the engine side main mount 6 is disposed between the bracket 10 and a right-hand front side frame 11 of the vehicle body frame F. A bracket 13 is attached to a left-hand front side frame 12 of the vehicle body frame F, and the transmission side main mount 7 is disposed between the bracket 13 and a transmission case 14 of the transmission T.

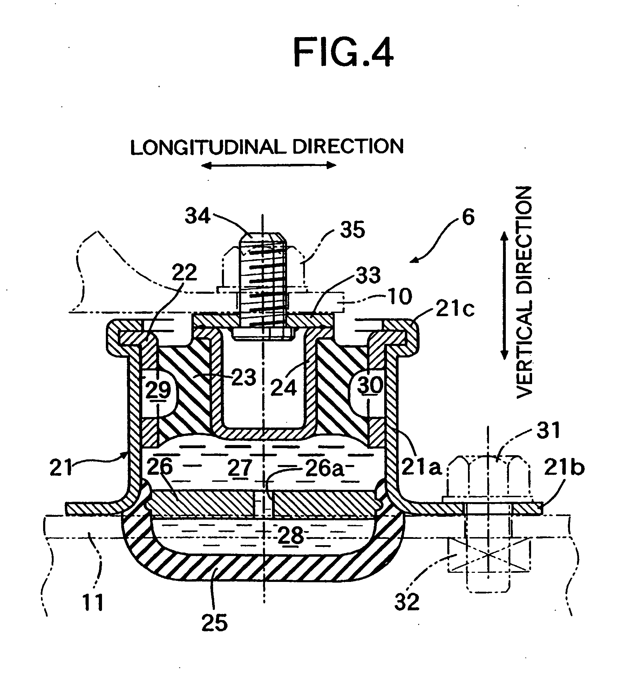

In FIG. 4, the engine side main mount 6 includes a casing 21 having a cylindrical casing main portion 21a and a flange portion 21b projecting radially outward from the lower end of the casing main portion 21a. A substantially cylindrical outer tube 22 fitted inside the casing main portion 21a is fastened to the casing 21 by means of a crimped portion 21c formed at the upper end of the casing main portion 21a. An elastic material 23 is fixed to the inner periphery of the outer tube 22 by baking, and a cup-shaped inner tubular member 24 is fixed to the inner periphery of the elastic material 23 by baking. A cup-shaped elastic material 25 is fixed to the lower end of the casing main portion 21a by baking, and a partition 26 is fixed to the upper edge of the elastic material 25 by baking.

A first liquid chamber 27 is formed between the partition 26 and the elastic material 23. A second liquid chamber 28 is formed between the partition 26 and the elastic material 25. The first and second liquid chambers 27, 28 communicate with each other via an orifice 26a provided in the partition 26.

Furthermore, third and fourth liquid chambers 29, 30 are formed between the elastic material 23 and a middle section of the casing main portion 21a at positions in the longitudinal direction of the vehicle body. The third and fourth liquid chambers 29, 30 communicate with each other via an orifice (not illustrated).

The flange portion 21b of the casing 21 is secured to the front side frame 11 of the vehicle body frame F by means of a plurality of bolts 31 and nuts 32. A support plate 33 secured to the inner tubular member 24 is secured by means of bolts 34 and nuts 35 to the bracket 10 attached to the engine E.

In accordance with the engine side main mount 6 having the above-mentioned arrangement, the liquid moves through the orifice 26a so as to alternately increase and decrease the volumes of the first and second liquid chambers 27, 28, thereby generating a damping force to suppress vertical vibration of the power plant P. Furthermore, the liquid moves through the orifice (not illustrated) so as to alternately increase and decrease the volumes of the third and fourth liquid chambers 29, 30, thereby generating a damping force to suppress fore-and-aft vibration of the power plant P.

Adjusting the dimensions of the orifice 26a enables the peak frequency of the vertical damping coefficient to be set.

The transmission side main mount 7 has the same arrangement as that of the engine side main mount 6 so that the peak frequency of the vertical damping coefficient can be set, and detailed explanation thereof is omitted.

Referring again to FIG. 1 to FIG. 3, the vehicle body frame F includes a bracket 37 disposed above the right-hand front side frame 11. Provided between the bracket 37 and the bracket 10 attached to the cylinder block 8 and the cylinder head 9 of the engine E of the power plant P is a torque rod 38 disposed substantially horizontally within a plane substantially perpendicular to the axis of the crankshaft 5. This torque rod 38 includes elastic materials 39, 40 at opposite ends thereof. The front end of the torque rod 38 is connected to the bracket 10 via the elastic material 39 so that it can pivot around an axis parallel to the crankshaft 5. The rear end of the torque rod 38 is connected to the bracket 37 via the elastic material 40 so that it can pivot around an axis parallel to the crankshaft 5.

The vehicle body frame F includes a cross member 41 providing a connection between the two front side frames 11, 12 to the rear of the power plant P. Provided between a bracket 42 disposed on the cross member 41 and a bracket 43 attached to a crankcase 44 of the engine E of the power plant P is a torque rod 45 disposed substantially horizontally within a plane substantially perpendicular to the axis of the crankshaft 5. This torque rod 45 includes elastic materials 46, 47 at opposite ends thereof. The front end of the torque rod 45 is connected to the bracket 43 via the elastic material 46 so that it can pivot around an axis parallel to the crankshaft 5. The rear end of the torque rod 45 is connected to the bracket 42 via the elastic material 47 so that it can pivot around an axis parallel to the crankshaft 5.

The torque rod 38 is disposed above drive shafts 48L, 48R extending laterally from the transmission T of the power plant P, whereas the other torque rod 45 is disposed below the drive shafts 48L, 48R.

In such a mounting system, a frequency band of 5 to 15 Hz, which corresponds to the ride frequencies, is divided into a lower band, for example, 5 to 7 Hz, a middle band, for example, 7 to 10 Hz, and an upper band, for example, 9 to 15 Hz.

The vertical resonance frequency of a mounting structure that includes the engine side and transmission side main mounts 6, 7 and the pair of torque rods 38, 45 is set in the lower band (5 to 7 Hz). The roll resonance frequency around the principal axis of inertia of the mounting structure is set in the middle band (7 to 10 Hz). The damping peak frequency of the two main mounts 6, 7 is set in the upper band (9 to 15 Hz).

In the conventional principal axis of inertia 4-point support type mounting system, the vertical resonance frequency is about 10 Hz, and in the mounting system of the present invention, the vertical resonance frequency is set lower than that of the conventional device. Furthermore, in the conventional principal axis of inertia 4-point support type mounting system, the roll resonance frequency is about 16 Hz, and in the mounting system of the present invention, the roll resonance frequency is set lower than that of the conventional device. Moreover, in the conventional principal axis of inertia 4-point support type mounting system, the damping peak frequency of the two main mounts is about 6 to 8 Hz, and in the mounting system of the present invention, the damping peak frequency of the two main mounts 6, 7 is set higher than that of the conventional device.

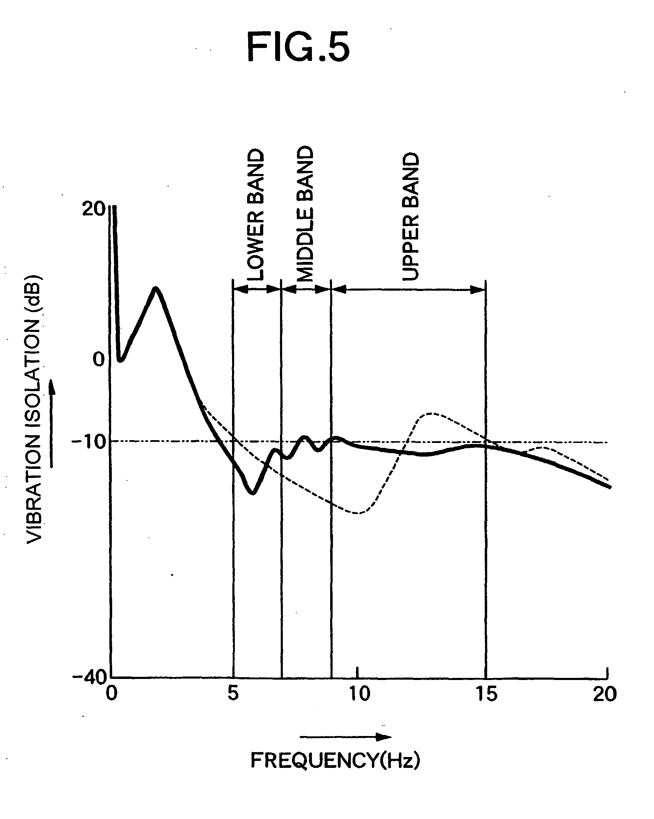

The operation of this embodiment is now explained by reference to FIG. 5. The frequency band of 5 to 15 Hz is divided into the three bands, that is, the lower, middle, and upper bands. The vertical resonance frequency of the mounting structure, which includes the two main mounts 6, 7 and the two torque rods 38, 45, is set in the lower band, the roll resonance frequency around the principal axis of inertia of the mounting structure is set in the middle band, and the damping peak frequency of the two main mounts 6, 7 is set in the upper band.

As a result, within the frequency band of 5 to 15 Hz, a vertical resonance frequency dynamic damper effect can be obtained in the lower band, a dynamic damper effect can be obtained due to coupling of the vertical and roll modes in the middle band, and a vehicle body frame responsive damping effect can be obtained in the upper band due to the damping setting of the main mounts 6, 7. As shown by a solid line in FIG. 5, it therefore becomes possible to achieve a vibration isolation of, for example, "-10 dB" over the entire ride frequency region of 5 to 15 Hz, that is, the ride comfort can be improved over the entire ride frequency region of 5 to 15 Hz.

In contrast, in the conventional principal axis of inertia 4-point support type mounting system, as shown by a broken line in FIG. 5, there is a part of the ride frequency region of 5 to 15 Hz where it is impossible to achieve a vibration isolation of "-10 dB".

An embodiment of the present invention has been described in detail above, but the present invention is not limited to the above-mentioned embodiment and can be modified in a variety of ways without departing from the scope of the present invention described in the claims.

### EFFECTS OF THE INVENTION

As described above, in accordance with the present invention described in Claims 1 and 2, it is possible to improve the ride comfort over the entire ride frequency region of 5 to 15 Hz.

## Claims

1. A vehicular power plant mounting system in which a power plant (P) comprising an engine (E) and a transmission (T) connected to the engine (E) at one end along an axis of a crankshaft (5) of the engine (E) is supported on a vehicle body frame (F) via
an engine side main mount (6) and a transmission side main mount (7), each mount (6,7) including a first elastic material (23, 25) and being disposed substantially on a principal axis of inertia of the power plant (P) in such a manner that a vertical damping coefficient peak frequency can be set, and via
a pair of upper and lower torque rods (38, 45) including a second elastic material (39, 40; 46, 47) which are disposed substantially horizontally within a plane substantially perpendicular to the axis of the crankshaft (5) between the power plant (P) and the vehicle body frame (F) above and below drive shafts (48L, 48R) extending from the transmission (T),
wherein a vertical resonance frequency of a mounting structure that includes the two main mounts (6, 7) and the two torque rods (38, 45) is set at 5 to 7 Hz,
a roll resonance frequency around the principal axis of inertia of the mounting structure is set at 7 to 10 Hz, and
a damping peak frequency of the two main mounts (6, 7) is set at 9 to 15 Hz.

2. A vehicular power plant mounting system in which a power plant (P) comprising an engine (E) and a transmission (T) connected to the engine (E) at one end along an axis of a crankshaft (5) of the engine (E) is supported on a vehicle body frame (F) via
an engine side main mount (6) and a transmission side main mount (7), each mount (6,7) including a first elastic material (23, 25) and being disposed substantially on a principal axis of inertia of the power plant (P) in such a manner that a vertical damping coefficient peak frequency can be set, and via
a pair of upper and lower torque rods (38, 45) including a second elastic material (39, 40; 46, 47) which are disposed substantially horizontally within a plane substantially perpendicular to the axis of the crankshaft (5) between the power plant (P) and the vehicle body frame (F) above and below drive shafts (48L, 48R) extending from the transmission (T),
wherein a frequency band of 5 to 15 Hz is divided into three bands, that is, upper, middle, and lower bands, and
a vertical resonance frequency of a mounting structure that includes the two main mounts (6, 7) and the two torque rods (38, 45) is set in the lower band,
a roll resonance frequency around the principal axis of inertia of the mounting structure is set in the middle band, and
a damping peak frequency of the two main mounts (6, 7) is set in the upper band.

3. A vehicle whose power plant is mounted using a power plant mounting system as claimed in claim 1 or claim 2.

## Patentansprüche

1. Anbringungssystem für ein Fahrzeugantriebsaggregat, in welchem ein Antriebsaggregat (P), das eine Maschine (E) und ein Getriebe (T) umfasst, welches an einem Ende entlang einer Achse einer Kurbelwelle (5) der Maschine (E) mit der Maschine (E) verbunden ist, an einem Fahrzeugkarosserierahmen (F) getragen ist, und zwar über
eine maschinenseitige Haupthalterung (6) und eine getriebeseitige Haupthalterung (7), wobei jede Halterung (6, 7) ein erstes elastisches Material (23, 25) umfasst und im Wesentlichen auf einer Hauptträgheitsachse des Antriebsaggregats (P) in solcher Weise angeordnet ist, dass eine Spitzenfrequenz des vertikalen Dämpfungskoeffizienten eingestellt werden kann, sowie über
ein Paar oberer und unterer Drehmomentstangen (38, 45), welche ein zweites elastisches Material (39, 40; 46, 47) umfassen und welche im Wesentlichen horizontal innerhalb einer zur Achse der Kurbelwelle (5) im Wesentlichen senkrechten Ebene zwischen dem Antriebsaggregat (P) und dem Fahrzeugkarosserierahmen (F) oberhalb und unterhalb von Antriebswellen (48L, 48R), die sich von dem Getriebe (T) aus erstrecken, angeordnet sind,
wobei eine vertikale Resonanzfrequenz einer Anbringungsstruktur, welche die beiden Haupthalterungen (6, 7) und die beiden Drehmomentstangen (38, 45) umfasst, auf 5 bis 7 Hz eingestellt ist,
eine Rollbewegungsresonanzfrequenz um die Hauptträgheitsachse der Anbringungsstruktur auf 7 bis 10 Hz eingestellt ist und
eine Dämpfungsspitzenfrequenz der beiden Haupthalterungen (6, 7) auf 9 bis 15 Hz eingestellt ist.

2. Anbringungssystem für ein Fahrzeugantriebsaggregat, in welchem ein Antriebsaggregat (P), das eine Maschine (E) und ein Getriebe (T) umfasst, welches an einem Ende entlang einer Achse einer Kurbelwelle (5) der Maschine (E) mit der Maschine (E) verbunden ist, an einem Fahrzeugkarosserierahmen (F) getragen ist, und zwar über
eine maschinenseitige Haupthalterung (6) und eine getriebeseitige Haupthalterung (7), wobei jede Halterung (6, 7) ein erstes elastisches Material (23, 25) umfasst und im Wesentlichen auf einer Hauptträgheitsachse des Antriebsaggregats (P) in solcher Weise angeordnet ist, dass eine Spitzenfrequenz des vertikalen Dämpfungskoeffizienten eingestellt werden kann, sowie über
ein Paar oberer und unterer Drehmomentstangen (38, 45), welche ein zweites elastisches Material (39, 40; 46, 47) umfassen und welche im Wesentlichen horizontal innerhalb einer zur Achse der Kurbelwelle (5) im Wesentlichen senkrechten Ebene zwischen dem Antriebsaggregat (P) und dem Fahrzeugkarosserierahmen (F) oberhalb und unterhalb von Antriebswellen (48L, 48R), die sich von dem Getriebe (T) aus erstrecken, angeordnet sind,
wobei ein Frequenzband von 5 bis 15 Hz in drei Bänder unterteilt ist, nämlich in ein oberes, ein mittleres und ein unteres Band, und
eine vertikale Resonanzfrequenz einer Anbringungsstruktur, welche die beiden Haupthalterungen (6, 7) und die beiden Drehmomentstangen (38, 45) umfasst, in dem unteren Band festgelegt ist,
eine Rollbewegungsresonanzfrequenz um die Hauptträgheitsachse der Anbringungsstruktur in dem mittleren Band festgelegt ist und
eine Dämpfungsspitzenfrequenz der beiden Haupthalterungen (6, 7) in dem oberen Band festgelegt ist.

3. Fahrzeug, dessen Antriebsaggregat unter Verwendung eines Anbringungssystems für ein Antriebsaggregat, wie es in Anspruch 1 oder Anspruch 2 beansprucht ist, angebracht ist.

## Revendications

1. Système de montage de groupe moteur pour véhicule dans lequel un groupe moteur (P) comprenant un moteur (E) et une transmission (T) connectée au moteur (E) à une extrémité située le long d'un axe d'un vilebrequin (5) du moteur (E) est supporté par un châssis de véhicule (F) par l'intermédiaire :
d'un dispositif de montage principal du côté du moteur (6) et d'un dispositif de montage principal du côté de la transmission (7), chaque dispositif de montage (6, 7) comprenant un premier matériau élastique (23, 25) et étant essentiellement disposé sur un axe principal d'inertie du groupe moteur (P) de telle sorte qu'il est possible de régler une fréquence de crête de coefficient d'amortissement, et par l'intermédiaire
d'une paire de tiges de poussée (38, 45) comprenant un second matériau élastique (39, 40 ; 46, 47), qui sont disposées de manière essentiellement horizontale dans un plan essentiellement perpendiculaire à l'axe du vilebrequin (5) entre le groupe moteur (P) et le châssis de véhicule (F) au-dessus et en dessous d'arbres d'entraînement (48L, 48R) qui s'étendent à partir de la transmission (T),
dans lequel une fréquence de résonance verticale d'une structure de montage qui comprend les deux dispositifs de montage principaux (6, 7) et les deux tiges de poussée (38, 45) est réglée entre 5 et 7 Hz,
une fréquence de résonance de roulement autour de l'axe principal d'inertie de la structure de montage est réglée entre 7 et 10 Hz, et
une fréquence de crête d'amortissement des deux dispositifs de montage principaux (6, 7) est réglée entre 9 et 15 Hz.

2. Système de montage de groupe moteur pour véhicule dans lequel un groupe moteur (P) comprenant un moteur (E) et une transmission (T) connectée au moteur (E) à une extrémité située le long d'un axe d'un vilebrequin (5) du moteur (E) est supporté par un châssis de véhicule (F) par l'intermédiaire :
d'un dispositif de montage principal du côté du moteur (6) et d'un dispositif de montage principal du côté de la transmission (7), chaque dispositif de montage (6, 7) comprenant un premier matériau élastique (23, 25) et étant essentiellement disposé sur un axe d'inertie principal du groupe moteur (P) de telle sorte qu'il est possible de régler une fréquence de crête de coefficient d'amortissement, et par l'intermédiaire
d'une paire de tiges de poussée supérieure et inférieure (38, 45) comprenant un second matériau élastique (39, 40 ; 46, 47), qui sont disposées de manière essentiellement horizontale dans un plan essentiellement perpendiculaire à l'axe du vilebrequin (5) entre le groupe moteur (P) et le châssis de véhicule (F) au-dessus et en dessous d'arbres d'entraînement (48L, 48R) qui s'étendent à partir de la transmission (T),
dans lequel une bande de fréquence située entre 5 et 15 Hz est divisée en trois bandes, à savoir une bande supérieur, une bande intermédiaire et une bande inférieure, et
une fréquence de résonance verticale d'une structure de montage qui comprend les deux dispositifs de montage principaux (6, 7) et les deux tiges de poussée (38, 45) est réglée sur la bande inférieure,
une fréquence de résonance de roulement autour de l'axe principal d'inertie de la structure de montage est réglée sur la bande intermédiaire, et
une fréquence de crête d'amortissement des deux dispositifs de montage principaux (6, 7) est réglée sur la bande supérieure.

3. Véhicule dont le groupe moteur est monté en utilisant un système de montage de groupe moteur selon la revendication 1 ou la revendication 2.
